# EUROPÄISCHE PATENTSCHRIFT

(11) **EP 0 563 739 B1**
(45) Veröffentlichungstag und Bekanntmachung des Hinweises auf die Patenterteilung: **27.09.1995**
(21) Anmeldenummer: 93104690.8
(22) Anmeldetag: 22.03.1993
(51) Int. Cl.: G21C 9/016

(54) **Kernreaktoranlage mit Auffangseinrichtung für einen abschmelzenden Reaktorkern und Verfahren zum Betrieb einer solchen Kernreaktoranlage**
Nuclear reactor installation with a melting core catching device and method of operating such an installation
Installation de réacteur nucléaire avec un dispositif récupérateur d'un coeur, en fusion et methode de mise en oeuvre d'une telle installation

(30) Priorität: 02.04.1992 DE 4211030
(43) Veröffentlichungstag der Anmeldung: 06.10.1993
(73) Patentinhaber: SIEMENS AKTIENGESELLSCHAFT, 80333 München (DE)
(72) Erfinder: Schabert, Hans-Peter, Dipl.-Ing., W-8520 Erlangen (DE); Weisshäupl, Horst, Dr., W-8522 Herzogenaurach (DE); Bittermann, Dietmar, Dipl.-Ing., W-8510 Fürth (DE); Göbel, Andreas, Dipl.-Ing., W-8524 Neunkirchen/Brand (DE)

(56) Entgegenhaltungen:
- DE-A- 2 459 339
- DE-B- 2 525 554
- DE-B- 2 925 680
- GB-A- 2 030 347
- US-A- 5 049 352

## Beschreibung

Bei einem hypothetischen schweren Störfall in einem Kernkraftwerk mit wassergekühltem Reaktor kann angenommen werden, daß der Reaktorkern schmilzt und danach auf der unteren Seite des Reaktordruckbehälters in die Schildgrube des Reaktorsicherheitsbehälters austritt. Um einen solchen Störfall beherrschen zu können, müssen geeignete bauliche Maßnahmen getroffen werden, die verhindern, daß die unter Umständen mit Überdruck aus dem Reaktordruckbehälter austretende und sich im Bodenbereich der Kernreaktoranlage ansammelnde Schmelze zu einem Versagen des Reaktorsicherheitsbehälters führt.

Aus der deutschen Patentschrift DE-C 28 40 086 ist beispielsweise eine Kernreaktoranlage mit einer Auffangeinrichtung für einen abschmelzenden Reaktorkern bekannt, bei der unterhalb der den Reaktordruckbehälter umgebenden Schildgrube ein vertikaler Abflußkanal vorgesehen ist. Dieser Abflußkanal durchsetzt den Reaktorsicherheitsbehälter und führt in eine unterhalb des Reaktorsicherheitsbehälters angeordnete Schmelzgrube. Dort wird die aus dem Reaktordruckbehälter austretende Schmelze auf ein Absorberbett verteilt, das durch eine mit wasserfreien Stoffen gefüllte stählerne Wanne gebildet ist. Nach Aufschmelzen dieser stählernen Wanne gelangt die Schmelze auf den Boden der Schmelzgrube. Der Boden und die Seitenwände dieser Schmelzgrube sind zusätzlich wassergekühlt, so daß die Schmelze allmählich erstarrt.

Bei der aus der deutschen Patentschrift DE-C 29 25 680 bekannten Kernreaktoranlage ist zur Aufnahme der Schmelze ebenfalls eine unterhalb dem Niveau des Reaktorfundamentes angeordnete Auffangwanne vorgesehen. Die Auffangwanne befindet sich dabei nicht direkt unterhalb des Reaktorkerns, sondern ist neben dem Reaktorkern angeordnet und über eine horizontal über der Auffangwanne auslaufenden Rutsche mit dem Boden des Reaktorgebäudes verbunden.

Bei diesen bekannten Konstruktionen zur Aufnahme der Kernschmelze kann jedoch unter ungünstigen Umständen nicht verhindert werden, daß bereits vor oder während des Ausfließens der Schmelze Wasser in den Auffangraum eingedrungen ist oder eindringt. Dies kann zur Folge haben, daß die Schmelze mit hoher Geschwindigkeit direkt auf Wasser auftrifft, dort fragmentiert wird und eine sehr heftige, plötzliche Dampfbildung verursacht.

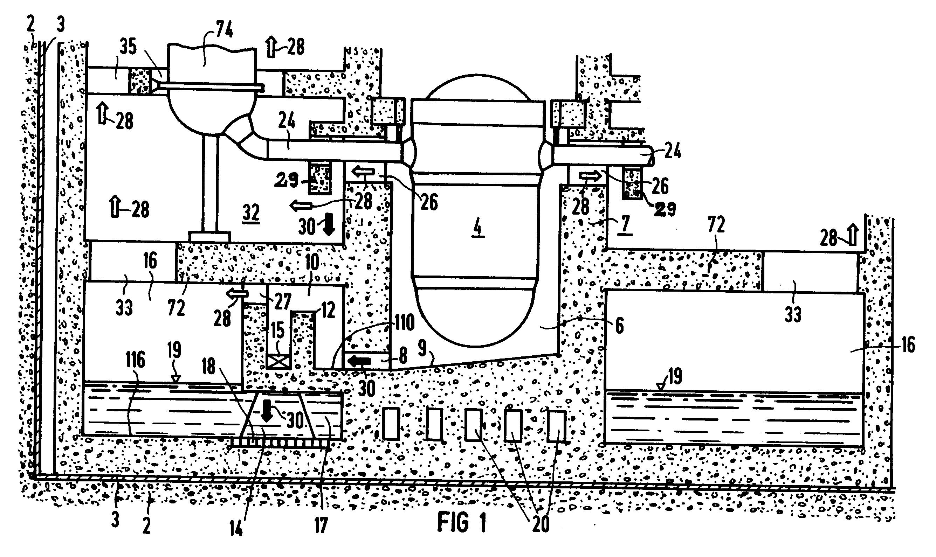

Aus "Emerging Nuclear Energy Systems 1989, Icenes 89, Karlsruhe 03. bis 06. Juli, Proceedings of the fifth International Conference on Emerging Nuclear Energy Systems, Seiten 19 bis 24" ist aus Figur 1 eine Kernschmelzenauffangvorrichtung bekannt, bei der innerhalb des Reaktorsicherheitsbehälters direkt unterhalb des Reaktordruckbehälters eine gekühlte Auffangwanne angeordnet ist, in der sich die Schmelze großflächig ausbreiten und in direktem Kontakt mit Wasser abkühlen kann. Der durch die Nachzerfallswärme der Schmelze erzeugte Dampf kondensiert im oberen Teil der Stahlhülle eines Reaktorsicherheitsbehälters und fließt von dort aus zurück zur Kernschmelzenauffangvorrichtung. Auch bei dieser bekannten Kernreaktoranlage kann jedoch nicht ausgeschlossen werden, daß sich bereits vor dem Versagen des Reaktordruckbehälters Sumpfwasser in der Auffangwanne und in der Schildgrube ansammelt, so daß im Augenblick des Versagens des Reaktordruckbehälters das Risiko besteht, daß die austretende Schmelze direkt und mit hoher Geschwindigkeit auf die Wasseroberfläche auftreffen kann. Dies kann ebenfalls zu einer starken Fragmentierung der Schmelze und zu einer sehr heftigen Dampfbildung führen, die den Reaktorsicherheitsbehälter gefährdet.

Der Erfindung liegt nun die Aufgabe zugrunde, eine Kernreaktoranlage mit einem in einem Reaktordruckbehälter angeordneten wassergekühlten Reaktor anzugeben, bei der im Fall eines Versagens des Reaktordruckbehälters die Heftigkeit der Dampfbildung erheblich reduziert werden kann.

Die genannte Aufgabe wird gemäß der Erfindung mit einer Kernreaktoranlage mit den Merkmalen des Anspruches 1 gelöst. Gemäß den Merkmalen dieses Anspruches enthält die Kernreaktoranlage einen wassergekühlten Reaktor, einen in einer Schildgrube innerhalb eines Reaktorsicherheitsbehälters angeordneten Reaktordruckbehälter, eine im unteren Bereich dieser Schildgrube angeordnete Auslaßöffnung sowie ein Auffangbecken zur Aufnahme einer Schmelze und eines Wasservorrats, wobei zwischen der Auslaßöffnung und dem Auffangbecken eine Bremszelle mit einer Einrichtung zum Bremsen und Umlenken einer durch die Auslaßöffnung strömenden Schmelze vorgesehen ist. Durch die in der Bremszelle angeordnete Einrichtung zum Abbremsen und Umlenken der strömenden Schmelze wird die Geschwindigkeit der Schmelze vor Auftreffen auf den Wasservorrat des Auffangbeckens verringert und eine Fragmentierung der Schmelze unterdrückt. Die schwächere Fragmentierung der Schmelze verringert die mit dem Wasser momentan in Kontakt tretende Schmelzenoberfläche. Dementsprechend verringert sich die in der Zeiteinheit gebildete Dampfmenge auf eine Rate, die sich durch vorhandene Druckentlastungsöffnungen gefahrlos im Reaktorsicherheitsbehälter ausbreiten kann.

Das Auffangbecken hat vorzugsweise einen ebenen Boden, der tiefer liegt als der tiefste Bereich des Bodens der Schildgrube, so daß die Schmelze abfließen kann und das Auffangbecken einen Wasservorrat aufnehmen kann, dessen Wasserspiegel ebenfalls tiefer als der tiefste Bereich des Bodens der Schildgrube liegt.

Insbesondere ist das Auffangbecken hinsichtlich seiner Lage und Größe derart bemessen, daß das Niveau des Wasserspiegels des zur Kühlung der Schmelze vorgesehenen Wasservorrats und des aus möglichen Leckagen hinzukommenden Kühlwassers stets tiefer liegt als die tiefsten Bereiche des Bodens der Schildgrube und der Bremszelle. Durch diese Maßnahme ist gewährleistet, daß auch bei zusätzlich zum Wasservorrat des Auffangbeckens aus Leckagen des Hauptkühlmittelkreislaufs hinzuströmenden Kühlwasser der Boden der Schildgrube und die Bremszelle vor Austreiben der Schmelze aus dem Reaktordruckbehälter trocken gehalten werden können, so daß die Schmelze beim Austreten aus dem Reaktordruckbehälter nicht direkt auf eine Wasseroberfläche auftreffen kann.

In einer bevorzugten Ausgestaltung der Erfindung liegt der Boden des Auffangbeckens wenigstens einen Meter unter dem tiefsten Bereich des Bodens der Schildgrube. Insbesondere ist der Boden der Bremszelle wenigstens einen Meter über dem Boden des Auffangbeckens angeordnet.

In einer weiteren bevorzugten Ausführungsform der Erfindung ist ein Auffangbecken mit einer Grundfläche von wenigstens 100 m² vorgesehen.

Die Bremszelle ist vorzugsweise mit einer zusätzlichen oberen Entlastungsöffnung für Dampf versehen, durch die der Wasserdampf, der mit der Schmelze von der Schildgrube her übergetreten ist, von der Bremszelle in den oberen Bereich des Reaktorsicherheitsbehälter abströmen kann.

In einer weiteren bevorzugten Ausgestaltung der Erfindung ist die Schildgrube in ihrem oberen Bereich ebenfalls mit einer Druckentlastungsöffnung versehen. Durch diese kann Wasserdampf mit geringem Schmelzeanteil in eine Kammer und von dort in den Reaktorsicherheitsbehälter entweichen, so daß der treibende Differenzdruck an der unteren Auslaßöffnung kleiner wird. Dadurch wird die Schmelzenströmung im Bereich der Auslaßöffnung beruhigt.

Um ein Ausströmen der Schmelze aus der Schildgrube zu erleichtern, ist die Schildgrube vorzugsweise mit einem Boden versehen, der ein Gefälle in Richtung zur Auslaßöffnung hat.

In einer bevorzugten Ausgestaltung der Erfindung befindet sich das Auffangbecken innerhalb des Reaktorsicherheitsbehälters. In diesem Fall kann der obere Wandbereich des Reaktorsicherheitsbehälters als Kühl- und Kondensationsfläche für den durch die Schmelze aus dem Wasservorat entweichenden Dampf dienen.

In einer weiteren vorteilhaften Ausgestaltung der Erfindung ist unterhalb des Bodens der Bremskammer ein oder mehrere mit Wasser gefüllte Hohlräume vorgesehen. Vorzugsweise sind auch unterhalb des Bodens der Schildgrube ein Hohlraum oder mehrere mit Wasser gefüllte Kanäle angeordnet. Der Hohlraum und die Kanäle kommunizieren vorzugsweise mit dem Wasservorrat des Auffangbeckens. Eventuell am Boden der Schildgrube oder der Bremszelle verbleibende Schmelzenreste können möglicherweise längerfristig in den Boden der Schildgrube oder Bremszelle eindringen. In diesem Fall werden die Schmelzenreste von diesem Hohlraum bzw. von den Kanälen aufgenommen und gekühlt, so daß ein weiteres Eindringen in die Fundamentstruktur und eine Verletzung des dichten Reaktorsicherheitsbehälters verhindert werden.

Um ein möglichst ruhiges Einströmen der Schmelze in den Wasservorrat des Auffangbeckens zu gewährleisten, ist insbesondere eine stetig gekrümmte Auslaufrinne vorgesehen, die tangential auf den Boden des Auffangbeckens mündet. Da die Schmelze im Mündungsbereich der Auslaufrinne noch nicht abgekühlt ist, ist dort vorzugsweise der Boden mit einer feuerfesten Auskleidung versehen. Die Schmelze breitet sich von dort aus großflächig unter Wasser auf dem flachen Boden des Auffangbeckens aus.

In einer weiteren bevorzugten Ausführungsform können mehrere am Umfang der Schildgrube angeordnete Bremszellen vorgesehen sein. Insbesondere kann auch eine die Schildgrube ringförmig umgebende Bremszelle mit mehreren versetzten Ein- und Auslaßöffnungen vorgesehen sein.

Um die Belastbarkeit der Tragstruktur im Bereich des Fundaments auch bei Austritt der Schmelze in die Auffangbecken zu gewährleisten, ist es von Vorteil, anstelle eines ringförmig um die Schildgrube angeordneten Auffangbeckens mehrere Auffangbecken sternförmig, insbesondere zwei Auffangbecken einander gegenüberliegend um die Schildgrube anzuordnen.

Ferner wird die Aufgabe gemäß der Erfindung mit einem Verfahren zum Betrieb einer Kernreaktoranlage mit den Merkmalen des Anspruchs 20 gelöst.

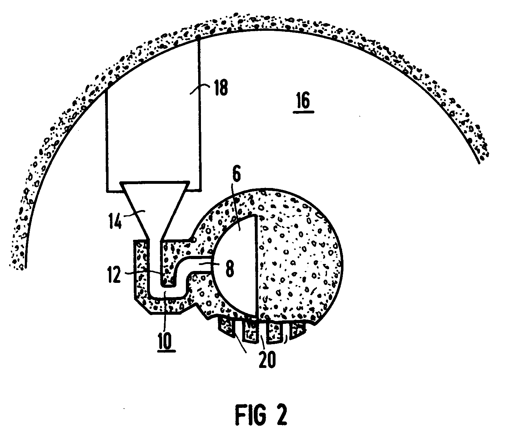

Zur weiteren Erläuterung der Erfindung wird auf die Ausführungsbeispiele der Zeichnung verwiesen, in deren Figuren 1 und 2 eine Kernreaktoranlage gemäß der Erfindung in einem vertikalen bzw. horizontalen Teilschnitt schematisch veranschaulicht ist.

Figur 3 zeigt eine vorteilhafte Ausgestaltung der Kernreaktoranlage im Bereich ihres Fundaments in einem horizontalen Teilschnitt und in

Figuren 4 und 5 ist eine weitere bevorzugte Ausgestaltung einer Kernreaktoranlage gemäß der Erfindung in einem vertikalen bzw. horizontalen Teilschnitt veranschaulicht.

Gemäß Figur 1 ist in einem Reaktorsicherheitsbehälter 2 einer Kernreaktoranlage ein Reaktordruckbehälter 4 in einer diesen umgebenden und tragenden, eine Schildgrube 6 bildenden Betonstruktur 7 angeordnet. Der Reaktordruckbehälter 4 enthält einen in der Figur nicht dargestellten wassergekühlten Reaktor oder Reaktorkern. Im Beispiel der Figur ist ein im Fundamentbereich der Kernreaktoranlage zylindrischer Reaktorsicherheitsbehälter 2 aus Beton vorgesehen. Zusätzlich kann noch ein im Betonmantel des Reaktorsicherheitsbehälters 2 angeordneter Liner 3 aus Stahl vorgesehen sein. Der Reaktordruckbehälter 4 ist über Hauptkühlmittelleitungen 24 an Dampferzeuger 74 angeschlossen, von denen in der Figur nur einer dargestellt ist.

Die zylindrische Schildgrube 6 hat vorzugsweise eine Wanddicke von 2m und ist in Höhe ihres Bodens 9 mit einer radialen Auslaßöffnung 8 versehen, die in eine neben der Schildgrube 6 angeordnete Bremszelle 10 mündet. Die Bremszelle 10 ist mit Wänden versehen, deren Wanddicke vorzugsweise etwa 1m beträgt, und enthält eine Einrichtung 12 zum Umlenken und Abbremsen einer mit hoher Geschwindigkeit durch die beispielsweise etwa 0,5 m² große Auslaßöffnung 8 fließenden Schmelze. Im Beispiel der Figur ist diese Einrichtung 12 ein quer zur Auslaßöffnung 8 angeordneter Wandvorsprung aus Beton, der ebenfalls eine Wanddicke von etwa 1m hat, so daß die durch die Auslaßöffnung 8 fließende Schmelze seitlich und nach oben umgelenkt und abgebremst wird, bevor sie über eine am Boden 110 der Bremszelle 10 angeordnete Öffnung 15 in der Figur nach hinten in eine Auslaufrinne 14 mündet.

Die Auslaufrinne 14 führt unterhalb der Bremszelle 10 auf den Boden 116 eines im Beispiel der Figur ringförmig die Schildgrube 6 umgebenden Auffangbeckens 16. Der Boden 116 des Auffangbeckens 16 ist eben und hat eine Grundfläche von wenigstens 100 m², bei einer angenommenen Reaktorwärmeleistung von 3800 MW vorzugsweise etwa 400 m². Er liegt beispielsweise etwa 1m, vorzugsweise etwa 3m bis 5m tiefer als der tiefste Bereich des Bodens 9 der Schildgrube 6, so daß der aus dem Reaktordruckbehälter 4 austretende geschmolzene Reaktorkern in das Auffangbecken 16 abfließen kann.

Das Auffangbecken 16 und die Bremszelle 10 sind mit einer gemeinsamen Betondecke 72 versehen, die zugleich als Abstützung für den darüber angeordneten Dampferzeuger 74 dient.

Die Bremszelle 10 ist im Bereich ihrer Decke 72 mit einer in das Auffangbecken 16 mündenden Druckentlastungsöffnung 27 versehen, die zur Beruhigung des Ausfließens der Schmelze in die Auslaufrinne 14 dient. Das Auffangbecken 16 ist im Bereich seiner Decke 72 ebenfalls mit großflächigen Druckentlastungsöffnungen 33 versehen, durch die der entstehende Dampf nach oben in eine Kammer 32 und über weitere im Deckenbereich dieser Kammer 32 angeordnete Druckentlastungsöffnungen 35 nach oben in den Reaktorsicherheitsbehälter 2 entweichen kann.

Die Auslaufrinne 14 endet im Auffangbecken 16 in einem mit einer feuerfesten Auskleidung 18, beispielsweise einer Keramik, versehenen Bereich des Bodens 116 des Auffangbeckens 16.

Das Auffangbecken 16 ist vorzugsweise bereits während des Normalbetriebs der Kernreaktoranlage mit beispielsweise 1500 m³ Borwasser gefüllt, das auch zur Notkühlung des Reaktors im Fall eines Leckstörfalls verwendet werden kann. Der Wasserspiegel 19 des Wasservorrats liegt tiefer als der tiefste Bereich des Bodens der Schildgrube 6. Dabei muß sichergestellt sein, daß auch durch das vor dem Beginn einer Kernschmelze, beispielsweise durch Leckagen, in das Auffangbecken 16 sich zusätzliche entleerende Kühlwasser, dessen Volumen beispielsweise eine Größenordnung von etwa 500 m³ haben kann, das resultierende Gesamtniveau des sich einstellenden Wasserspiegels 19 das Niveau des Bodens 110 bzw. 9 der Bremszelle 10 und der Schildgrube 6 nicht überschreitet, so daß diese Räume sicher trocken bleiben.

Die Bremszelle 10 ragt balkonartig in das Auffangbecken 16 hinein, so daß unterhalb des Bodens der Bremszelle 10 ein mit Wasser gefüllter Hohlraum 17 gebildet wird.

Unterhalb der Schildgrube 6 befinden sich innerhalb des Betonbodens, beispielsweise in einer Tiefe von etwa 2m, mehrere ebenfalls mit Borwasser gefüllte Kühlkanäle 20, die mit dem Wasservorrat des Auffangbeckens 16 kommunizieren.

Der bei Versagen des Reaktordruckbehälters 4 in die Schildgrube 6 austretende Wasserdampf wird durch eine im Bereich der Hauptkühlmittelleitung 24 angeordnete Druckentlastungsöffnung 26 in eine Kammer 32 und von dort über die Öffnungen 35 in den oberen Bereich des Reaktorsicherheitsbehälters 2 abgeführt. Dadurch wird eine möglichst rasche Separation zwischen der austretenden Schmelze und dem Wasserdampf erreicht. In dem aus der Schildgrube 6 durch die Druckentlastungsöffnung 26 austretenden Wasserdampf kann noch eine Restmenge an Schmelze mitgerissen werden. Eine unmittelbar hinter dieser Druckentlastungsöffnung 26 in der Kammer 32 angeordnete Umlenkwand 29 schleudert diese Schmelzenreste nach unten.

Die in der Figur mit dem Bezugszeichen 28 versehenen weißen Pfeile geben die Strömung des Wasserdampfs wieder. Der Weg der Schmelze wird in der Figur durch die schwarzen Pfeile 30 angedeutet.

Durch vorangegangene Druckentlastungsmaßnahmen ist der Innendruck im Reaktordruckbehälter 4 vor dem Versagen auf höchstens 20 bar reduziert. Dieser Druck wirkt im Augenblick des Versagens als treibende Kraft für den geschmolzenen Reaktorkern, der aus der sich bildenden Lecköffnung des Reaktordruckbehälters 4 mit hoher Geschwindigkeit austritt und auf den trockenen Beton der Wände oder des Bodens 9 der Schildgrube 6 auftrifft. Ist der Schmelzstrahl direkt auf die Auslaßöffnung 8 gerichtet, so fließt die Schmelze mit besonders hoher Geschwindigkeit durch die Auslaßöffnung 8 und trifft dort auf die Einrichtung 12 der Bremskammer 10. Dort wird die Schmelze abgebremst und umgelenkt. Die Strömungsgeschwindigkeit der Schmelze wird somit vor Erreichen der Auslaufrinne 14 reduziert und der Schmelzenfluß wird beruhigt.

Durch die im Bereich der Hauptkühlmittelleitungen 24 angeordneten Druckentlastungsöffnungen 26, durch die der gemeinsam mit der Schmelze aus dem Reaktordruckbehälter 4 austretende Dampf schnell und wirksam entweichen kann, wird der an der Auslaßöffnung 8 wirksame treibende Differenzdruck merklich reduziert. Dies führt zu einer weiteren Beruhigung der in die Bremszelle 10 übertretenden Schmelze.

Über die Auslaufrinne 14 fließt die Schmelze ruhig und wenig fragmentiert auf den mit Borwasser gefluteten ebenen Boden 116 des Auffangbeckens 16, auf dem sich die Schmelze ausbreitet. Da die Schmelze über die Auslaufrinne 14 aus der trockenen Bremszelle 10 auf den tieferliegenden Boden des Auffangbeckens 16 langsam hinunterfließt, wird die Kontaktfläche zwischen Schmelze und Wasser beim Auftreffen auf die Wasseroberfläche im Auffangbecken 16 minimiert und das Ausbreiten der Schmelze erleichtert. Es bilden sich also nur wenig Dampf und nur wenige vorzeitig erstarrte Schmelzbrocken, die die horizontale Ausbreitung der Schmelze am Boden 116 des Auffangbeckens 16 behindern können.

Die Schmelze soll nach Ausbreitung eine Resthöhe von möglichst nur 10 bis 20 cm behalten. Sie erstarrt dann allmählich infolge der Kühlwirkung des darüberliegenden Wassers. Der durch die Nachzerfallswärme der Schmelze entstehende Wasserdampf entweicht durch die großflächigen Druckentlastungsöffnungen 33 in der Decke 72 des Auffangbeckens 16 nach oben und wird beispielsweise durch eine Sprühanlage kondensiert. Der kondensierte Wasserdampf läuft zurück in das Auffangbecken 16, so daß eine kontinuierliche Kühlung der Schmelze gewährleistet ist.

Da der Boden 9 und die Wände der Schildgrube 6 vorzugsweise aus Beton bestehen, können sie die durch das Austreten der Schmelze mit hoher Geschwindigkeit auftretenden enormen Stoßkräfte beim Versagen des Reaktordruckbehälters 4 aufnehmen. Beton ist jedoch gegen länger andauernde Hitzeeinwirkung empfindlich. Um einen möglichst großen Teil der Schmelze innerhalb weniger Minuten aus der Schildgrube 6 zum Abfließen zu bringen, ist es deshalb vorteilhaft, den Boden 9 der Schildgrube 6 mit einem Gefälle von beispielsweise 10 % in Richtung zur Auslauföffnung 8 zu versehen.

Nach längerer Zeit ist trotzdem eine örtliche Zerstörung des Betons am Boden 9 bzw. 110 der Schildgrube 6 und der Bremszelle 10 durch die Hitze verbleibender Schmelzenreste nicht auszuschließen. Die unter der Schildgrube 6 mit einer hinreichend tragfähigen Überdeckung von etwa 1m Beton angeordneten wassergefüllten Kühlkanäle 20 und der Hohlraum 17 unterhalb der Bremszelle 10 bilden für diesen Fall eine Barriere, die das weitere Vordringen der Kernschmelze in das Fundament zum Liner 3 der Sohlplatte des Reaktorsicherheitsbehälters 2 verhindert.

Gemäß Figur 2 wird die Einrichtung 12 zum Umlenken und Abbremsen der Schmelze durch einen quer zur Auslaßöffnung 8 in der Bremskammer 10 befindlichen Wandvorsprung aus Beton gebildet. Durch diesen Wandvorsprung wird eine bogenförmige doppelte Umlenkung der aus der Schildgrube 6 austretenden Schmelze verursacht.

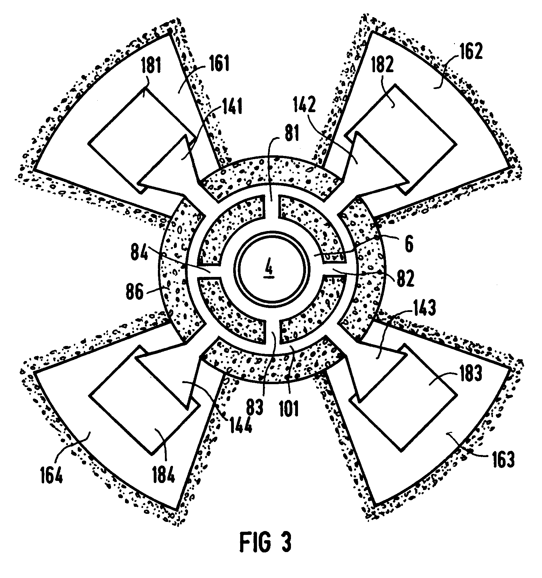

Im Beispiel der Figur 3 sind vier Auffangbecken 161 bis 164 sternförmig um die Schildgrube 6 angeordnet. Die Schildgrube 6 ist mit vier Auslaßöffnungen 81 bis 84 versehen, die in eine, die Schildgrube 6 umgebende ringförmige Bremszelle 101 münden. Jedes der Auffangbecken 161 bis 164 ist mit der Bremszelle 101 durch eine Auslaufrinne 141, 142, 143 bzw. 144 verbunden, die jeweils auf einen feuerfest ausgekleideten Bodenbereich 181, 182, 183 bzw. 184 des Auffangbeckens 161, 162, 163 bzw. 164 führt. Die Auffangbecken 161 bis 164 sind gegenüber den Auslaßöffnungen 81 bis 84 versetzt angeordnet, so daß sich auch in diesem Ausführungsbeispiel eine Umlenkung und Verzögerung der Schmelzenströmung ergibt. Durch die Aufteilung der Schmelze auf mehrere räumlich voneinander getrennte Auffangbecken 161 bis 164 wird nur ein Teil der gesamten Fundamentstruktur des Reaktorsicherheitsbehälters 2 belastet und die Versagenswahrscheinlichkeit des Reaktorsicherheitsbehälters 2 und der den Reaktordruckbehälter 4 tragenden Betonstruktur verringert.

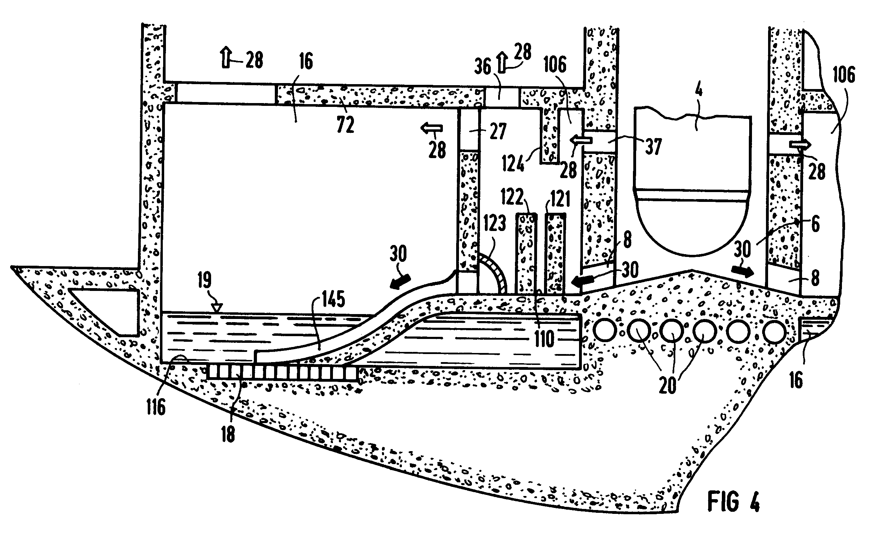

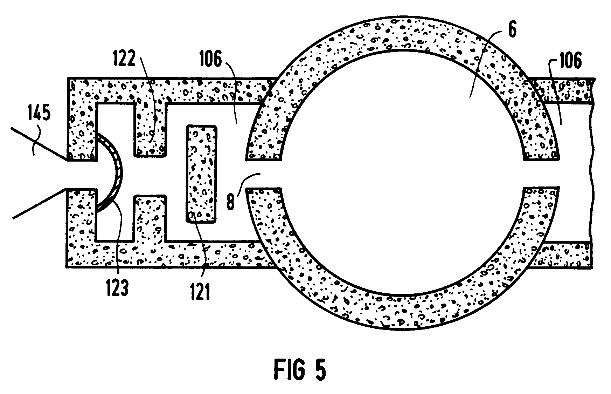

Gemäß Figuren 4 und 5 ist zwischen dem Auffangbecken 16 und der Schildgrube 6 eine Bremszelle 106 vorgesehen, die quer zur Strömungsrichtung 30 der aus der Auslaßöffnung 8 austretenden Schmelze zwei Wände 121 und 122 aufweist. Die Wände 121 und 122 sind in Strömungsrichtung hintereinander am Boden 110 der Bremszelle 106 angeordnet. Die Wände 121 und 122 bestehen vorzugsweise aus Beton. Zusätzlich ist eine vor der Auslaufrinne 14 angeordnete Wand 123 vorgesehen, die aus einer gewölbten dünnen Stahlplatte besteht. Diese Wand 123 schottet den Auslaß zur Auslaufrinne 14 solange ab, bis sie durch die Schmelzenhitze zerstört ist.

Die Bremszelle 106 enthält zusätzlich zu den in das Auffangbecken 16 mündenden Druckentlastungsöffnungen 27 eine weitere Druckentlastungsöffnung 36 im Bereich ihrer Decke 72, durch die Wasserdampf direkt nach oben entweichen kann.

Von der Schildgrube 6 mündet in die Bremszelle 106 zusätzlich eine Druckentlastungsöffnung 37. Innerhalb der Bremszelle 106 ist gegenüber dieser Druckentlastungsöffnung 37 eine weitere Schikane 124 angeordnet, durch die mitgerissene Schmelzenanteile im Wasserdampf abgebremst und auf den Boden 110 der Bremszelle 106 umgelenkt werden.

In das Aufangbecken 16 mündet eine Auslaufrinne 145, deren Rinnenboden im Längsschnitt eine stetig gekrümmte Fallinie hat, die im Anfangsbereich der Form einer Wurfparabel angeglichen ist, damit die Schmelze sich nicht infolge ihrer horizontalen Fließgeschwindigkeit von der Rinne 145 örtlich abhebt. Die Auslaufrinne 145 mündet dann tangential auf den Beckenboden 116 in den mit einer feuerfesten Auskleidung 18 versehenen Bereich.

Im Beispiel der Figuren 4 und 5 sind zwei einander gegenüberliegende Bremszellen 106 und Auffangbecken 16 vorgesehen. Der Boden der Schildgrube 6 hat dann eine dachförmige Gestalt, um das Ablaufen der Schmelze in die zwei gegenüberliegenden Auslaßöffnungen 8 zu erleichtern.

## Patentansprüche

1. Kernreaktoranlage mit einem wassergekühlten Reaktor, einem in einer Schildgrube (6) innerhalb eines Reaktorsicherheitsbehälters (2) angeordneten Reaktordruckbehälter (4), einer im unteren Bereich dieser Schildgrube (6) angeordneten Auslaßöffnung (8) sowie einem Auffangbecken (16) zur Aufnahme einer Schmelze und eines Wasservorrats, wobei zwischen der Auslaßöffnung (8) und dem Auffangbecken (16) eine Bremszelle (10) mit einer Einrichtung (12) zum Abbremsen und Umlenken der durch die Auslaßöffnung (8) strömenden Schmelze vorgesehen ist.

2. Kernreaktoranlage nach Anspruch 1, **dadurch gekennzeichnet**, daß das Auffangbecken (16) mit einem ebenen Boden (116) vorgesehen ist, der tiefer liegt als der tiefste Bereich des Bodens (9) der Schildgrube (6).

3. Kernreaktoranlage nach Anspruch 1 oder Anspruch 2, **dadurch gekennzeichnet**, daß das Auffangbecken (16) hinsichtlich seiner Lage und Größe derart bemessen ist, daß das Niveau des Wasserspiegels (19) des zur Kühlung der Schmelze vorgesehenen Wasservorrats und des aus möglichen Leckagen hinzukommenden Kühlwassers stets tiefer liegt als die tiefsten Bereiche des Bodens (9) der Schildgrube (6) und des Bodens (110) der Bremszelle (10).

4. Kernreaktoranlage nach Anspruch 3, **dadurch gekennzeichnet**, daß der Boden (116) des Auffangbeckens (16) wenigstens einen Meter unter dem tiefsten Bereich des Bodens (9) der Schildgrube (6) liegt.

5. Kernreaktoranlage nach Anspruch 4, **dadurch gekennzeichnet**, daß der Boden (110) der Bremszelle (10) wenigstens einen Meter über dem Boden (116) des Auffangbeckens (16) angeordnet ist.

6. Kernreaktoranlage nach einem der Ansprüche 2 bis 5, **dadurch gekennzeichnet**, daß der Boden (116) des Auffangbeckens (16) eine Fläche von mindestens 100 m² hat.

7. Kernreaktoranlage nach einem der vorhergehenden Anspruche, **dadurch gekennzeichnet**, daß die Bremszelle (10) in ihrem oberen Bereich mit einer Druckentlastungsöffnung (27, 36) für Dampf versehen ist.

8. Kernreaktoranlage nach einem der vorhergehenden Ansprüche, **dadurch gekennzeichnet**, daß die Schildgrube (6) in ihrem oberen Bereich mit einer Druckentlastungsöffnung (26) versehen ist.

9. Kernreaktoranlage nach Anspruch 8, **dadurch gekennzeichnet**, daß für die Druckentlastungsöffnung (26) eine zusätzliche Einrichtung (29) zum Abbremsen und Umlenken des durch die Druckentlastungsöffnung (26) austretenden Dampf/Schmelze-Gemisches, vorgesehen ist.

10. Kernreaktoranlage nach einem der vorhergehenden Ansprüche, **dadurch gekennzeichnet**, daß die Schildgrube (6) mit einem Boden (9) versehen ist, der ein Gefälle in Richtung zur Auslaßöffnung (8) hat.

11. Kernreaktoranlage nach einem der vorhergehenden Ansprüche, **dadurch gekennzeichnet**, daß die Böden (9, 110) und die Wände der Schildgrube (6) und Bremszelle (10) aus Beton mit einer Wandstärke von wenigstens 1m bestehen.

12. Kernreaktoranlage nach einem der vorhergehenden Ansprüche, **dadurch gekennzeichnet**, daß das Auffangbecken (16) innerhalb des Reaktorsicherheitsbehälters (2) angeordnet ist.

13. Kernreaktoranlage nach einem der vorhergehenden Ansprüche, **dadurch gekennzeichnet**, daß unterhalb des Bodens (110) der Bremskammer (10) ein mit Wasser gefüllter Hohlraum (17) vorgesehen ist.

14. Kernreaktoranlage nach Anspruch 13, **dadurch gekennzeichnet**, daß unterhalb des Bodens (9) der Schildgrube (6) mehrere mit Wasser gefüllte Kanäle (20) vorgesehen sind.

15. Kernreaktoranlage nach einem der vorhergehenden Ansprüche, **dadurch gekennzeichnet**, daß zwischen der Bremszelle (10) und dem Auffangbecken (16) eine stetig gekrümmte Auslaufrinne (14) vorgesehen ist, die tangential auf den Boden (116) des Auffangbeckens (16) mündet.

16. Kernreaktoranlage nach Anspruch 15, **dadurch gekennzeichnet**, daß der Boden (116) des Auffangbeckens (16) im Mündungsbereich der Auslaufrinne (14) mit einer feuerfesten Auskleidung (18) versehen ist.

17. Kernreaktoranlage nach einem der vorhergehenden Ansprüche, **dadurch gekennzeichnet**, daß am Umfang der Schildgrube (6) mehrere Bremszellen (10) angeordnet sind.

18. Kernreaktoranlage nach einem der vorhergehenden Ansprüche, **dadurch gekennzeichnet**, daß eine die Schildgrube (6) ringförmig umgebende Bremszellen (101) vorgesehen ist.

19. Kernreaktoranlage nach Anspruch 17 oder Anspruch 18, **dadurch gekennzeichnet**, daß mehrere sternförmig um die Schildgrube (6) angeordnete Auffangbecken (161 - 164) vorgesehen sind.

20. Verfahren zum Betrieb einer Kernreaktoranlage nach einem der vorhergehenden Ansprüches **dadurch gekennzeichnet**, daß der Boden (116) des Auffangbeckens (16) während des Normalbetriebs des Reaktors mit Wasser bedeckt ist, wobei das Niveau des Wasserspiegels (19) tiefer liegt als der tiefste Bereich des Bodens der Schildgrube.

## Claims

1. Nuclear reactor installation having a water-cooled reactor, a reactor pressure vessel (4) arranged in a shielding pit (6) within a reactor containment shell (2), an outlet opening (8) arranged in the lower region of this shielding pit (6) and a collecting basin (16) to accommodate a molten mass and a water supply, whereby between the outlet opening (8) and the collecting basin (16) there is provided a brake cell (10) with a device (12) for braking and deflecting the molten mass flowing through the outlet opening (8).

2. Nuclear reactor installation according to claim 1, characterized in that the collecting basin (16) with a flat base (116) is provided, the base being lower than the lowest region of the base (9) of the shielding pit (6).

3. Nuclear reactor installation according to claim 1 or claim 2, characterized in that the collecting basin (16) is dimensioned with respect to its position and size in such a way that the level of the water surface (19) of the water supply, provided for cooling the molten mass, and of the cooling water arriving from possible leakages is always lower than the lowest regions of the base (9) of the shielding pit (6) and the base (110) of the brake cell (10).

4. Nuclear reactor installation according to claim 3, characterized in that the base (116) of the collecting basin (16) lies at least one meter below the lowest region of the base (9) of the shielding pit (6).

5. Nuclear reactor installation according to claim 4, characterized in that the base (110) of the brake cell (10) is arranged at least one meter above the base (116) of the collecting basin (16).

6. Nuclear reactor installation according to one of claims 2 to 5, characterized in that the base (116) of the collecting basin (16) has an area of at least 100 m².

7. Nuclear reactor installation according to one of the preceding claims, characterized in that the brake cell (10) is provided in its upper region with a pressure relief opening (27, 36) for steam.

8. Nuclear reactor installation according to one of the preceding claims, characterized in that the shielding pit (6) is provided in its upper region with a pressure relief opening (26).

9. Nuclear reactor installation according to claim 8, characterized in that for the pressure relief opening (26) an additional device (29) is provided for braking and deflecting the mixture of steam and molten mass issuing through the pressure relief opening (26).

10. Nuclear reactor installation according to one of the preceding claims, characterized in that the shielding pit (6) is provided with a base (9) which has a slope in the direction of the outlet opening (8).

11. Nuclear reactor installation according to one of the preceding claims, characterized in that the bases (9, 110) and the walls of the shielding pit (6) and brake cell (10) consist of concrete with a wall thickness of at least 1m.

12. Nuclear reactor installation according to one of the preceding claims, characterized in that the collecting basin (16) is arranged within the reactor containment shell (2).

13. Nuclear reactor installation according to one of the preceding claims, characterized in that a cavity (17) filled with water is provided below the base (110) of the brake chamber (10).

14. Nuclear reactor installation according to claim 13, characterized in that several channels (20) filled with water are provided below the base (9) of the shielding pit (6).

15. Nuclear reactor installation according to one of the preceding claims, characterized in that between the brake cell (10) and the collecting basin (16) a continuously curved discharge duct (14) is provided which opens tangentially on to the base (116) of the collecting basin (16).

16. Nuclear reactor installation according to claim 15, characterized in that the base (116) of the collecting basin (16) is provided with a fireproof lining (18) in the opening region of the discharge duct (14).

17. Nuclear reactor installation according to one of the preceding claims, characterized in that several brake cells (10) are arranged on the circumference of the shielding pit (6).

18. Nuclear reactor installation according to one of the preceding claims, characterized in that a brake cell (101) is provided which surrounds the shielding pit (6) in an annular manner.

19. Nuclear reactor installation according to claim 17 or claim 18, characterized in that several collecting basins (161 - 164) are provided which are arranged in the shape of a star about the shielding pit (6).

20. Method for the operation of a nuclear reactor installation according to one of the preceding claims, characterized in that the base (116) of the collecting basin (16) is covered in water during normal operation of the reactor, whereby the level of the water surface (19) is lower than the lowest region of the base of the shielding pit.

## Revendications

1. Installation de réacteur nucléaire comportant un réacteur refroidi par eau, un caisson sous pression (4) du réacteur, disposé dans une fosse de protection (6) à l'intérieur d'une enceinte de sécurité (2) du réacteur, une ouverture de sortie (8) disposée dans la partie inférieure de cette fosse de protection (6), ainsi qu'une piscine de collecte (16) servant à recevoir une masse fondue et une réserve d'eau, et dans laquelle, entre l'ouverture de sortie (8) et la piscine de collecte (16), est prévue une cellule de freinage (10) comportant un dispositif (12) pour freiner et dévier une masse fondue s'écoulant par l'ouverture de sortie (8).

2. Installation de réacteur nucléaire suivant la revendication 1, caractérisée par le fait que la piscine de collecte (16) est pourvue d'un fond plat (116), qui est plus profond que la partie la plus profonde du fond (9) de la fosse de protection (6).

3. Installation de réacteur nucléaire suivant la revendication 1 ou 2, caractérisée par le fait que la position et de les dimensions de la piscine de collecte (16) sont déterminées de telle sorte que le niveau de la surface de l'eau (19) de la réserve d'eau prévue pour le refroidissement de la masse fondue, et de l'eau de refroidissement qui s'ajoute en raison d'une fuite possible, est toujours plus basse que les zones les plus profondes du fond (9) de la fosse de protection (6) et du fond (110) de la cellule de freinage (10).

4. Installation de réacteur nucléaire suivant la revendication 3, caractérisée par le fait que le fond (116) de la piscine de collecte (16) est situé au moins à un mètre au-dessous de la partie la plus basse du fond (9) de la fosse de protection (6).

5. Installation de réacteur nucléaire suivant la revendication 4, caractérisée par le fait que le fond (110) de la cellule de freinage (10) est disposé au moins un mètre au-dessus du fond (116) de la piscine de collecte (16).

6. Installation de réacteur nucléaire suivant l'une des revendications 2 à 5, caractérisée par le fait que le fond (116) de la piscine de collecte (16) possède une surface égale à au moins 100 m².

7. Installation de réacteur nucléaire suivant l'une des revendications précédentes, caractérisée par le fait que la cellule de freinage (10) est pourvue, dans sa partie supérieure, d'une ouverture de détente de pression (27,36) pour la vapeur.

8. Installation de réacteur nucléaire suivant l'une des revendications précédentes, caractérisée par le fait que la fosse de protection (6) comporte, dans sa partie supérieure, une ouverture de détente de pression (26).

9. Installation de réacteur nucléaire suivant la revendication 8, caractérisée par le fait que pour l'ouverture de détente de pression (26) il est prévu un dispositif supplémentaire (22) pour le freinage et le renvoi du mélange vapeur/masse fondue qui sort par l'ouverture de détente de pression (26).

10. Installation de réacteur nucléaire suivant l'une des revendications précédentes, caractérisée par le fait que la fosse de protection (6) comporte un fond (9), qui possède une inclinaison par rapport à l'ouverture de sortie (8).

11. Installation de réacteur nucléaire suivant l'une des revendications précédentes, caractérisée par le fait que les fonds (9,110) et les parois de la fosse de protection (6) et de la cellule de freinage (10) sont constitués par du béton possédant une épaisseur d'au moins 1 m.

12. Installation de réacteur nucléaire suivant l'une des revendications précédentes, caractérisée par le fait que la piscine de collecte (16) est disposée à l'intérieur de l'enceinte de sécurité (2) du réacteur.

13. Installation de réacteur nucléaire suivant l'une des revendications précédentes, caractérisée par le fait qu'une cavité (17) remplie d'eau est prévue au-dessous du fond (110) de la chambre de freinage (10).

14. Installation de réacteur nucléaire suivant la revendication 13, caractérisée par le fait que plusieurs canaux (20) remplis d'eau sont prévus au-dessous du fond (9) de la fosse de protection (6).

15. Installation de réacteur nucléaire suivant l'une des revendications précédentes, caractérisée par le fait qu'entre la cellule de freinage (10) et la piscine de collecte (16) est prévue une goulotte de sortie (14) cintrée continûment, qui débouche tangentiellement sur le fond (107) de la piscine de collecte (16).

16. Installation de réacteur nucléaire suivant la revendication 15, caractérisée par le fait que le fond (116) de la piscine de collecte (16) comporte un revêtement réfractaire (18) dans la zone d'embouchure de la goulotte de sortie (14).

17. Installation de réacteur nucléaire suivant l'une des revendications précédentes, caractérisée par le fait que plusieurs cellules de freinage (10) sont prévues sur la périphérie de la fosse de protection (6).

18. Installation de réacteur nucléaire suivant l'une des revendications précédentes, caractérisée par le fait qu'il est prévu une cellule de freinage (101) qui entoure annulairement la fosse de protection (6).

19. Installation de réacteur nucléaire suivant la revendication 17 ou la revendication 18, caractérisée par le fait que plusieurs piscines de collecte (161-164) disposées en étoile autour de la fosse de protection (6) sont prévues.

20. Procédé pour faire fonctionner l'installation de réacteur nucléaire suivant l'une des revendications précédentes, caractérisé par le fait que le fond (116) de la piscine de collecte (16) est recouvert d'eau pendant le fonctionnement normal du réacteur, le niveau de la surface de l'eau (19) étant situé plus bas que la zone la plus basse du fond de la fosse de protection.
